# EUROPÄISCHE PATENTSCHRIFT

(11) **EP 1 160 560 B1**
(45) Veröffentlichungstag und Bekanntmachung des Hinweises auf die Patenterteilung: **31.03.2004**
(21) Anmeldenummer: 01110957.6
(22) Anmeldetag: 07.05.2001
(51) Int. Cl.: G01M 17/007, G01M 7/08

(54) **Aufprallsimulationsvorrichtung für eine Lenksäule**
Impact simulating device for a steering column
Simulateur de choc pour colonne de direction

(30) Priorität: 08.05.2000 DE 10022091
(43) Veröffentlichungstag der Anmeldung: 05.12.2001
(73) Patentinhaber: Willi Elbe, 71732 Tamm (DE)
(72) Erfinder: Hauhoff, Jörg Dr., 71636 Ludwigsburg (DE); Meyle, Lothar, 74321 Bietigheim-Bissingen (DE)
(74) Vertreter: Jeck, Anton, Dipl.-Ing.

(56) Entgegenhaltungen:
- US-A- 4 116 041
- "ANNOUNCEMENT" AUTOMOTIVE ENGINEER,GB,MECHANICAL ENGINEERING PUBL.LTD. BURY ST.EDMUNDS, Bd. 19, Nr. 6, 1. Dezember 1994 (1994-12-01), Seite 43 XP000486507 ISSN: 0307-6490
- PATENT ABSTRACTS OF JAPAN vol. 018, no. 688 (P-1849), 26. Dezember 1994 (1994-12-26) & JP 06 273300 A (OSAKA GAS CO LTD), 30. September 1994 (1994-09-30)

## Beschreibung

Die Erfindung betrifft eine Simulationsvorrichtung zur Prüfung einer Teleskop-Lenksäule nach dem Oberbegriff des Anspruchs 1.

Für die Prüfung von Teleskop-Lenksäulen bzw. für die Entwicklungsunterstützung solcher Lenksäulen werden bisher Schlitten- oder Crashversuche unter Realbedingungen vorgenommen. Bei diesen Versuchen werden in Fahrzeugen Dummys eingesetzt, die auf den aus dem Lenkrad sich entfaltenden Airbag aufprallen, wobei die unter einem bestimmten Winkel auf den Airbag wirkenden Stoßkräfte auf die Lenksäule übertragen werden. Aus dem Verhalten der Lenksäule lassen sich dann Schlüsse für die Eignung oder Verbesserung der geprüften Lenksäulen ziehen.

Solche Versuche müssen zumindest stichprobenweise und für jeden einzelnen Lenksäulentyp durchgeführt werden und sind wegen des komplexen Messeaufbaus bzw. der Zerstörung der Fahrzeuge sehr teuer und zeitaufwendig.

Die Aufgabe der Erfindung besteht darin, eine Simulationsvorrichtung der im Oberbegriff des Anspruchs 1 genannten Art zu schaffen, mit der das Lenkrad und der Airbag nachgebildet und das Verhalten der Lenksäulen in einfacher und kostensparender Weise geprüft werden kann.

Diese Aufgabe wird mit den Merkmalen des Anspruchs 1 gelöst.

Das Lenkrad und der Airbag werden dabei im Wesentlichen durch die Vormasse und die Feder nachgebildet. Der Winkel der "auf den Airbag wirkenden Stoßkräfte kann durch die Schrägstellung der Lenksäulenachse in der Simulationsvorrichtung berücksichtigt werden. Die Massen der Fallmasse und der Vormasse, die Federcharakteristik sowie die Fallhöhe der Fallmasse können durch Vergleich mit Realcrashergebnissen oder Ergebnissen aus numerischen Berechnungen für den einzelnen Lenksäulentyp festgelegt werden, wobei die unterschiedlichen Massen leicht auswechselbar sind.

Gemäß einer einfachen, weiteren Ausbildung der Erfindung weist der Fallturm zwei auf einer Grundplatte befestigte Säulen mit jeweils einer vertikalen Führungsvorrichtung auf.

Gemäß einer einfachen, weiteren Ausbildung der Erfindung sind die Führungsvorrichtungen als leistenförmige Schienen ausgebildet.

Gemäß einer einfachen, weiteren Ausbildung der Erfindung ist die Vormasse durch zwei leistenförmige, durch ein Schutzrohr verbundene Vormassenkörper gebildet, nämlich einem oberen und einem unteren Vormassenkörper, die jeweils an ihren Längsenden mit Führungselementen zur Führung im Fallturm versehen sind.

Gemäß einer einfachen, weiteren Ausbildung der Erfindung sind die Führungselemente gabelförmig ausgebildet.

Eine einfache, weitere Ausbildung der Erfindung sieht vor, dass die Feder im Schutzrohr angeordnet ist und sich einerseits am unteren Vormassenkörper und andrerseits an einem Prallzylinder abstützt, der im Schutzrohr geführt ist und aus einer zentrischen Bohrung des oberen Vormassenkörpers nach oben herausragt.

Gemäß einer einfachen, weiteren Ausbildung der Erfindung ist die Feder als Paket aus Tellerfedern oder Ringfedern ausgebildet.

Gemäß einer einfachen, weiteren Ausbildung der Erfindung ist der Prallzylinder mittels einer Vorspannvorrichtung mit dem unteren Vormassenkörper verbunden. Dadurch kann der Feder eine Vorspannung erteilt werden.

Eine einfache, weitere Ausbildung der Erfindung sieht vor, dass der Prallzylinder als Hohlzylinder mit einem zum unteren Vormassenkörper hin gelegenen Boden ausgebildet ist, der mit einer axialen Bohrung versehen ist, und dass die Vorspannvorrichtung aus einer durch die Bohrung geführten und sich am Boden abstützenden Schraube und einer sich am unteren Vormassenkörper abstützenden Mutter gebildet ist.

Gemäß einer einfachen, weiteren Ausbildung der Erfindung ist zwischen dem unteren Ende der Feder und dem unteren Vormassenkörper eine Kraftmessdose eingefügt. Die auf die Lenksäule wirkenden Kräfte können somit kontrolliert werden.

Gemäß einer einfachen, weiteren Ausbildung der Erfindung ist das lenkradseitige Ende der Lenksäule mit einem Wälzlager versehen, das an der Unterseite der Vormasse abrollt. Daher werden Vormasse und Lenksäule vor Abnutzung geschützt.

Gemäß einer einfachen, weiteren Ausbildung der Erfindung ist die Basisvorrichtung auf der Grundplatte senkrecht zur Verbindungslinie der beiden Säulen feststellbar horizontal geführt. Damit kann die Lenksäule leicht in die erforderliche Position gebracht werden.

Gemäß einer einfachen, weiteren Ausbildung der Erfindung ist die Basisvorrichtung aus einem auf der Grundplatte geführten Bock und einem an diesem vertikal verschwenkbar gelagerten und an diesem feststellbaren Träger für die Lenksäule gebildet.

Gemäß einer weiteren Ausbildung der Erfindung ist am Fallturm eine Begrenzungsvorrichtung zum Auffangen der Fallmasse vorgesehen. Beschädigungen der Simulationsvorrichtung können damit bei deren unsachgemäßer Handhabung oder bei Bruch der Lenksäule vermieden werden.

Die Erfindung wird nun anhand von Ausführungsbeispielen näher erläutert. Es zeigen:
- Fig. 1: eine perspektivische Ansicht einer Simulationsvorrichtung gemäß der Erfindung,
- Fig. 2: eine Frontansicht der Simulationsvorrichtung der Fig. 1,
- Fig. 3: eine Seitenansicht von Einzelteilen der Simulationsvorrichtung der Fig. 1,
- Fig. 4: eine perspektivische Ansicht der in Fig. 1 gezeigten Vormasse,
- Fig. 5: einen Längsschnitt durch die in Fig. 4 gezeigte Vormasse mit Feder,
- Fig. 6: eine Seitenansicht der in Fig. 5 gezeigten Vormasse und
- Fig. 7: eine perspektivische Ansicht einer alternativen Ausführung einer Vormasse.

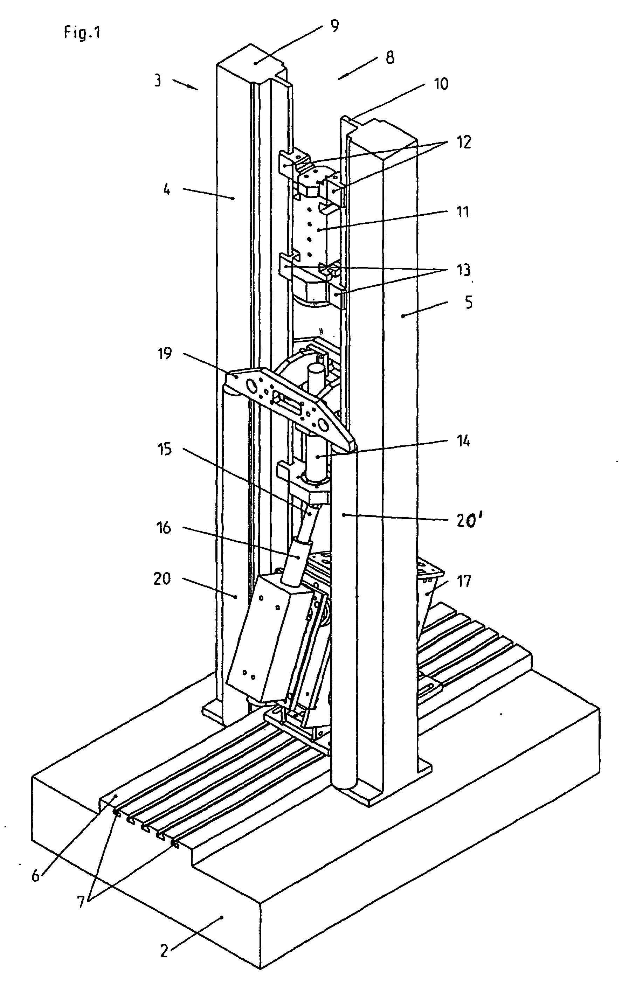

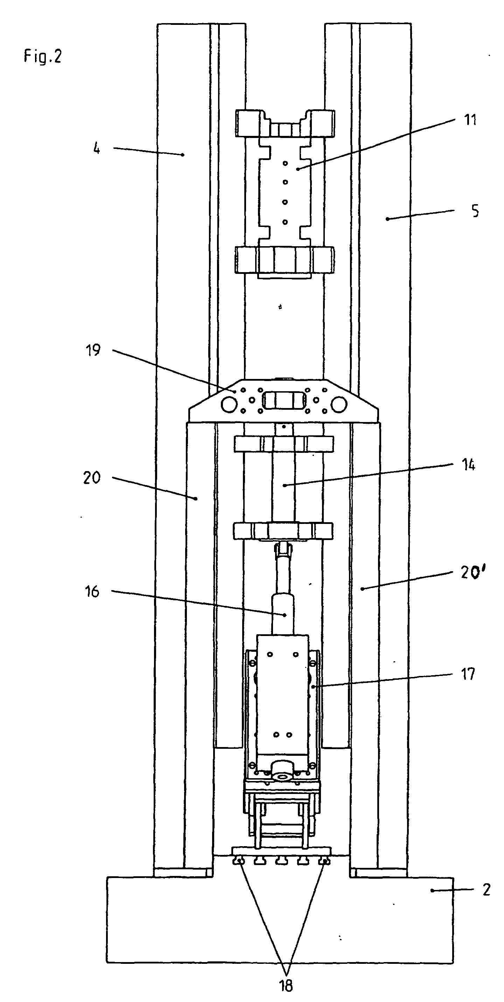

In den Figuren 1 und 2 ist eine Simulationsvorrichtung 1 gezeigt, die eine Grundplatte 2 und einen an dieser befestigten Fallturm 3 in Form von zwei Säulen 4 und 5 aufweist, die voneinander um einen bestimmten Abstand entfernt angeordnet sind. In einem Aufsatz 6 der Grundplatte 2 sind eine Anzahl von im Querschnitt schwalbenschwanzförmigen Nuten 7 eingearbeitet, die horizontal und senkrecht zu einer gedachten Verbindungslinie der beiden Säulen 3, 4 verlaufen. Die Säulen 4, 5 weisen eine nach innen weisende Führungsvorrichtung 8 in Form von leistenförmigen Schienen 9, 10 auf, die vertikal verlaufen.

Zwischen den Säulen 4, 5 ist eine Fallmasse 11 führbar. Zu diesem Zweck hat die Fallmasse 11 zwei obere gabelförmige Ansätze 12 und zwei untere gabel förmige Ansätze 13. In diese Ansätze greifen die Schienen 9, 10 ein. Die Fallmasse 11 ist durch Hochschieben im Fallturm 3 einfach entfernbar.

Unter der Fallmasse 11 befindet sich eine Vormasse 14, die noch näher erläutert wird und ebenfalls an den Schienen 9, 10 geführt wird. Diese Vormasse ruht mit ihrer Unterseite auf dem lenkradseitigen Ende 15 einer zu prüfenden Teleskop-Lenksäule 16.

Die Lenksäule 16 ist an einer Basisvorrichtung 17 lösbar befestigt, die auf ihrer Unterseite mit einer Anzahl in Fig. 2 erkennbarer, im Querschnitt schwalbenschwanzförmiger Schienen 18 versehen ist, die in den Nuten 7 geführt werden. Dadurch lässt sich die Basisvorrichtung 17 in Längsrichtung der Grundplatte 2 verschieben. Die Basisvorrichtung 17 kann in ihrer jeweiligen Position in nicht dargestellter Weise an der Grundplatte 2 arretiert werden.

Ferner ist zwischen der Fallmasse 11 und der Vormasse 14 eine Begrenzungsvorrichtung 19 vorgesehen, die diese Fallmasse auffängt, wenn deren Arbeitsbereich fälschlicherweise überschritten wird. Die Begrenzungsvorrichtung 19 stützt sich auf vier Pfosten, wie den Pfosten 20, 20' ab, die an den Säulen 4 und 5 auf deren Vorder- und Rückseiten befestigt sind und sich selbst wieder auf Füßen dieser Säulen abstützen.

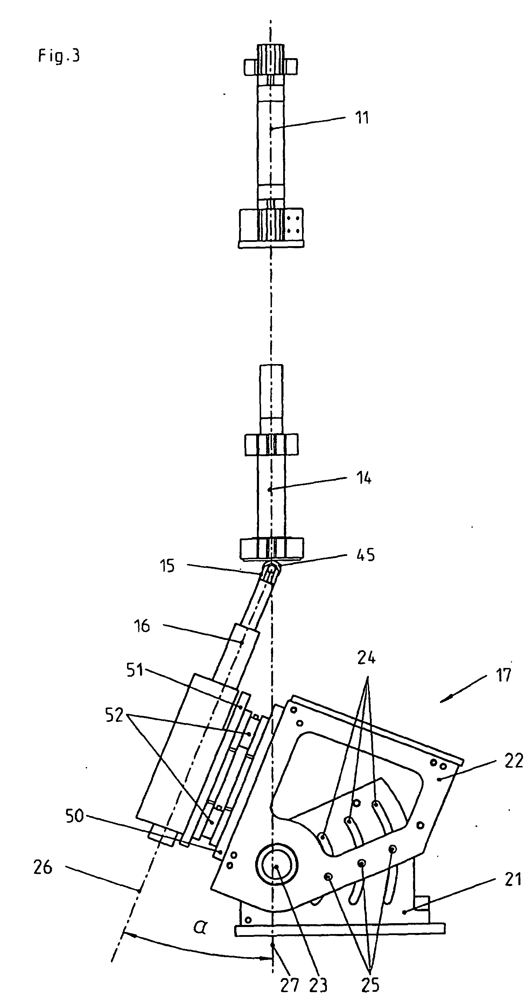

In Fig. 3 ist die Basisvorrichtung 17 näher dargestellt. Sie besteht aus einem auf der Grundplatte 2 verschiebbaren Bock 21 und einem an diesem vertikal verschwenkbar gelagerten und an diesem feststellbaren Träger 22. Um ein entsprechendes Drehlager 23 verlaufen im Bock 21 drei kreisbogenförmige Schlitze 24. In einem Arm des Trägers 22 sind drei in Reihe liegende Bohrungen 25 vorgesehen, die mit den Schlitzen 24 fluchten. Durch die Bohrungen 25 und die Schlitze 24 können Verschraubungen geführt werden, mit denen der Träger 22 am Bock 21 arretiert werden kann. Am Träger 22 ist die Lenksäule 16 lösbar befestigt. Mit der Basisvorrichtung 17 kann der Winkel α zwischen der Lenksäulenachse 26 und der Vertikalen 27 in einem Bereich 0° - 45° (nach Umsetzen der Platte auch 45° - 90°) festgelegt werden, wobei das lenkradseitige Ende 15 sich an der Vormasse 14 in der Vertikalen 27 abstützt.

Zwischen der Lenksäule 16 und der Basisvorrichtung 17 befinden sich eine untere Druckplatte 50 und eine obere Druckplatte 51, die hier parallel zueinander angeordnet sind und drei triaxiale Kraftaufnehmer 53 aufnehmen. Die Messaufnehmer messen die Zug-, Druck- und Querkräfte (Reaktionskräfte), aus denen Kräfte und Momente in der Lenksäule 16 errechnet werden. Die Messung der Reaktionskräfte hat den Vorteil, dass hier keine Massen beschleunigt werden (wie beim Rollenkopf) und somit keine Messfehler auftreten.

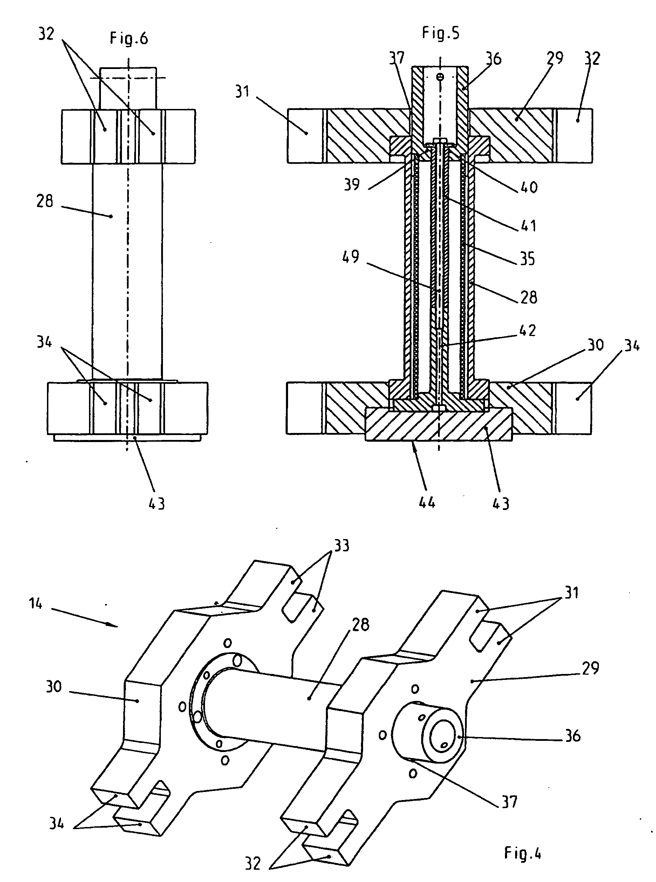

In den Figuren 4-6 ist die Vormasse 14 näher dargestellt. Die Vormasse 14 ist durch zwei leistenförmige, durch ein Schutzrohr 28 verbundene Vormassenkörper 29, 30 gebildet, nämlich einem oberen Vormassenkörper 29 und einem unteren Vormassenkörper 30, die jeweils an ihren Längsenden mit gabelförmigen Führungselementen 31, 32 bzw. 33, 34 zur Führung an den Schienen 9, 10 (Fig. 1) versehen sind. Im Schutzrohr 28 ist eine Feder 35, beispielsweise in Form einer Schraubenfeder, angeordnet. Diese Feder stützt sich einerseits am unteren Vormassenkörper 30 und andrerseits an einem Prallzylinder 36 ab, der im oberen Ende des Schutzrohrs 28 geführt ist und aus einer zentrischen Bohrung 37 des oberen Vormassenkörpers 29 nach oben herausragt.

Der Prallzylinder 36 ist mittels einer Vorspannvorrichtung 38 mit dem unteren Vormassenkörper 30 verbunden. Dazu ist dieser Prallzylinder als Hohlzylinder mit einem zum unteren Vormassenkörper 30 hin gelegenen Boden 39 ausgebildet, der mit einer axialen Bohrung 40 versehen ist. Die Vorspannvorrichtung 38 ist aus einer durch die Bohrung 40 geführten und sich am Boden 39 abstützenden Schraube 49 und einer sich am unteren Ende des Schutzrohrs 28 abstützenden Mutter 42 gebildet. Schraube 49 und Mutter 42 sind unter Vorspannung der Feder 35 miteinander verschraubt, die Vorspannkraft lässt sich durch die Länge des Distanzrohres 41 einstellen. Die Mutter 42 ist durch eine Platte 43 abgedeckt, die am unteren Vormassenkörper 30 befestigt ist und aus dieser nach unten geringfügig hervorsteht. An der Außenfläche 44 dieser Platte rollt das lenkradseitige Ende 15 der Lenksäule 16 ab, das vorzugsweise mit einem Wälzlager 45 (Fig. 3) versehen ist.

Wenn die Fallmasse 11 auf den Prallzylinder 36 fällt, gleitet dieser an dem Schutzrohr 28 und der Schraube 41 nach unten und drückt die Feder 35 zusammen. Die Stoßkraft der Fallmasse 11 wird daher gedämpft über die Platte 43 und das Wälzlager 45 auf die Lenksäule 16 übertragen.

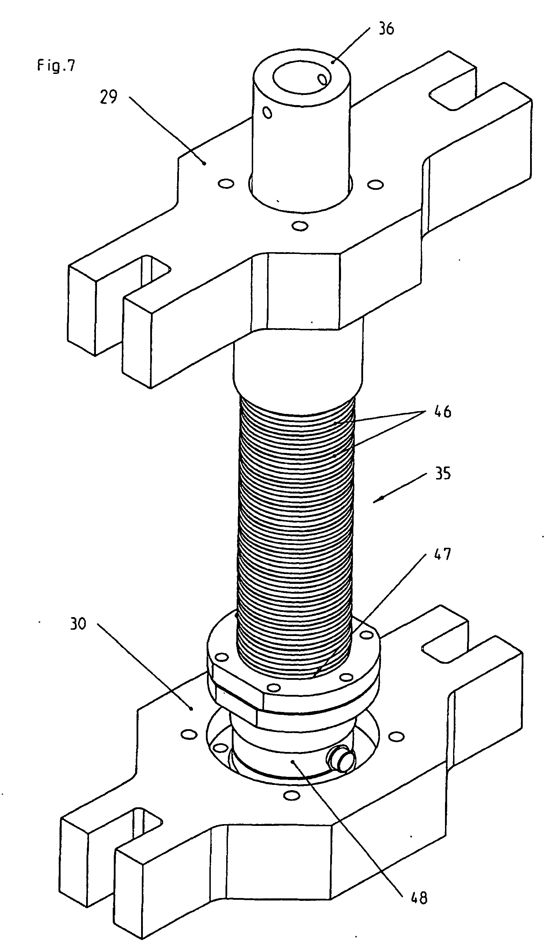

Eine alternative Ausführung der Vormasse ist in Fig. 7 gezeigt. Abweichend von der in den Figuren 4-6 gezeigten Ausführung besteht hier die Feder 35 aus einem Paket von Tellerfedern 46. Zwischen dem unteren Ende 47 der Feder 35 und dem unteren Vormassenkörper 30 ist eine Kraftmessdose 48 eingefügt, so dass die auf die Lenksäule 16 einwirkende Stoßkraft gemessen werden kann.

Die Fallmasse 11 liegt vorzugsweise in einem Bereich von 5-50kg. Die Fallhöhe kann derart gewählt werden, dass eine Geschwindigkeit der Fallmasse 11 von bis zu 30km/h erreicht wird. Die Vormasse 14 liegt vorzugsweise in einem Bereich von 4-15kg.

## Patentansprüche

1. Simulationsvorrichtung zur Nachbildung der auf eine Lenksäule, insbesondere Teleskop-Lenksäule, mit Airbag bei einem Aufprall einwirkenden Stoßkräfte zwecks Prüfung dieser Lenksäule,
**dadurch gekennzeichnet,**
**dass** in einem Fallturm (3) eine mit einer axialen Feder (35) versehehene Vormasse (14) und eine über der Feder (35) angeordnete und auf diese einwirkende Fallmasse (11) vertikal geführt sind, dass die Vormasse (14) auf das lenkradseitige Ende (15) der Lenksäule (16) einwirkt und
**dass** die Lenksäule (16) an einer unter der Vormasse (14) angeordneten Basisvorrichtung (17) befestigbar ist, die mit Einstellmitteln (23-25) zur Einstellung der Lenksäule in einem Bereich des Winkels (α) zwischen Lenksäulenachse (26) und Vertikale (27) versehen ist.

2. Simulationsvorrichtung nach Anspruch 1,
**dadurch gekennzeichnet,**
**dass** der Fallturm (3) zwei auf einer Grundplatte (2) befestigte Säulen (4, 5) mit jeweils einer vertikalen Führungsvorrichtung (8) aufweist.

3. Simulationsvorrichtung nach Anspruch 2,
**dadurch gekennzeichnet,**
**dass** die Führungsvorrichtungen (8) als leistenförmige Schienen (9, 10) ausgebildet sind.

4. Simulationsvorrichtung nach einem der Ansprüche 1 bis 3,
**dadurch gekennzeichnet,**
**dass** die Vormasse (14) durch zwei leistenförmige, durch ein Schutzrohr (28) verbundene Vormassenkörper (29, 30) gebildet ist, nämlich einem oberen (29) und einem unteren (30) Vormassenkörper, die jeweils an ihren Längsenden mit Führungselementen (31, 32; 33, 34) zur Führung im Fallturm (3) versehen sind.

5. Simulationsvorrichtung nach den Ansprüchen 3 und 4,
**dadurch gekennzeichnet,**
**dass** die Führungselemente (31, 32; 33, 34) gabelförmig ausgebildet sind.

6. Simulationsvorrichtung nach Anspruch 4 oder 5,
**dadurch gekennzeichnet,**
**dass** die Feder (35) im Schutzrohr (28) angeordnet ist und sich einerseits am unteren Vormassenkörper (30) und andrerseits an einem Prallzylinder (36) abstützt, der im Schutzrohr (28) geführt ist und aus einer zentrischen Bohrung (37) des oberen Vormassenkörpers (29) nach oben herausragt.

7. Simulationsvorrichtung nach Anspruch 6,
**dadurch gekennzeichnet,**
**dass** die Feder (35) als Paket aus Tellerfedern (46) ausgebildet ist.

8. Simulationsvorrichtung nach Anspruch 6 oder 7,
**dadurch gekennzeichnet,**
**dass** der Prallzylinder (36) mittels einer Vorspannvorrichtung (41, 42) mit dem unteren Vormassenkörper (30) verbunden ist.

9. Simulationsvorrichtung nach Anspruch 8,
**dadurch gekennzeichnet,**
**dass** der Prallzylinder (36) als Hohlzylinder mit einem zum unteren Vormassenkörper (30) hin gelegenen Boden (39) ausgebildet ist, der mit einer axialen Bohrung (40) versehen ist, und dass die Vorspannvorrichtung (41, 42) aus einer durch die Bohrung (40) geführten und sich am Boden (39) abstützenden Schraube und einer sich am unteren Vormassenkörper (30) abstützenden Mutter (42) gebildet ist.

10. Simulationsvorrichtung nach einem der Ansprüche 6 bis 9,
**dadurch gekennzeichnet,**
**dass** zwischen dem unteren Ende (47) der Feder (35) und dem unteren Vormassenkörper (30) eine Kraftmessdose (48) eingefügt ist.

11. Simulationsvorrichtung nach einem der Ansprüche 1 bis 10,
**dadurch gekennzeichnet,**
**dass** das lenkradseitige Ende (15) der Lenksäule (16) mit einem Wälzlager (45) versehen ist, das an der Unterseite (44) der Vormasse (14) abrollt.

12. Simulationsvorrichtung nach einem der Ansprüche 2 bis 11,
**dadurch gekennzeichnet,**
**dass** die Basisvorrichtung (17) auf der Grundplatte (2) senkrecht zur Verbindungslinie der beiden Säulen (4, 5) feststellbar horizontal geführt ist.

13. Simulationsvorrichtung nach Anspruch 12,
**dadurch gekennzeichnet,**
**dass** die Basisvorrichtung (17) aus einem auf der Grundplatte (2) geführten Bock (21) und einem an diesem vertikal verschwenkbar gelagerten und an diesem feststellbaren Träger (22) für die Lenksäule (16) gebildet ist.

14. Simulationsvorrichtung nach einem der Ansprüche 1 bis 13,
**dadurch gekennzeichnet,**
**dass** am Fallturm (3) eine Begrenzungsvorrichtung (19) zum Auffangen der Fallmasse (11) vorgesehen ist.

## Claims

1. Simulating device for imitating the impact forces which act upon on a steering column, more especially a telescopic-type steering column, with airbag during an impact, with the purpose of testing the steering column, **characterised in that** a preliminary mass (14), which is provided with an axial spring (35), and a dropping mass (11), which is disposed above the spring (35) and acts upon this latter, are guided in a vertical manner in a drop test rig (3), **in that** the preliminary mass (14) acts upon the end (15) of the steering column (16) on the steering column side, and **in that** the steering column (16) is securable to a base device (17), which is disposed under the preliminary mass (14), which base device (17) is provided with adjusting means (23 - 25) for adjusting the steering column within a range of the angle (α) between the axis (26) of the steering column and the vertical (27).

2. Simulating device according to claim 1, **characterised in that** the drop test rig (3) has two supports (4, 5), which are secured on a base plate (2), each with a vertical guiding device (8).

3. Simulating device according to claim 2, **characterised in that** the guiding devices (8) are the form of bar-shaped rails (9, 10).

4. Simulating device according to one of claims 1 to 3, **characterised in that** the preliminary mass (14) is formed by two bar-shaped preliminary mass bodies (29, 30), which are connected by a protective tube (28), that is to say an upper preliminary mass body (29) and a lower preliminary mass body (30), which are each provided with guiding elements (31, 32; 33, 34) on their longitudinal faces for guiding in the drop test rig (3).

5. Simulating device according to claims 3 and 4, **characterised in that** the guiding elements (31, 32; 33, 34) are fork-shaped.

6. Simulating device according to claim 4 or 5, **characterised in that** the spring (35) is disposed in the protective tube (28) and is supported on the one side on the lower preliminary mass body (30) and on the other side on a baffle cylinder (36), which is guided in the protective tube (28) and projects upwardly from a central bore (37) in the upper preliminary mass body (29).

7. Simulating device according to claim 6, **characterised in that** the spring (35) is in the form of a set comprising plate springs (46).

8. Simulating device according to claim 6 or 7, **characterised in that** the baffle cylinder (36) is connected to the lower preliminary mass body (30) by means of a pre-tensioning device (41, 42).

9. Simulating device according to claim 8, **characterised in that** the baffle cylinder (36) is in the form of a hollow cylinder with a bottom (39), which is placed towards the lower preliminary mass body (30) and is provided with an axial bore (40), and **in that** the pre-tensioning device (41, 42) is formed by a screw, which is guided through the bore (40) and is supported on the bottom (39), and a nut (42), which is supported on the lower preliminary mass body (30).

10. Simulating device according to one to claims 6 to 9, **characterised in that** a pressure gauge (48) is inserted between the lower end (47) of the spring (35) and the lower preliminary mass body (30).

11. Simulating device according to one of claims 1 to 10, **characterised in that** the end (15) of the steering column (16) on the steering column side is provided with a roller bearing (45), which rolls on the underside (44) of the preliminary mass (14).

12. Simulating device according to one of claims 2 to 11, **characterised in that** the base device (17) is guided horizontally so as to be securable on the base plate (2) at right angles relative to the connecting line of the two supports (4, 5).

13. Simulating device according to claim 12, **characterised in that** the base device (17) is formed from a support frame (21), which is guided on the base plate (2), and a holder (22) for the steering column (16), said holder (22) being pivotally mounted on this support frame (21) in a vertical manner and being securable to this support frame (21).

14. Simulating device according to one of claims 1 to 13, **characterised in that** a limiting device (19) is provided on the drop test rig (3) for catching the dropping mass (11).

## Revendications

1. Dispositif de simulation permettant de reproduire les forces de propulsion agissant avec un airbag lors d'un choc sur une colonne de direction, en particulier une colonne de direction télescopique, afin de tester cette colonne de direction,
**caractérisé en ce que**
une masse préparatoire (14) dotée d'un ressort (35) axial et une masse tombante (11) disposée sur le ressort (35) et agissant sur lui sont guidées verticalement dans une tour de chute (3), **en ce que** la masse préparatoire (14) agit sur l'extrémité (15) côté volant de la colonne de direction (16) et **en ce que** la colonne de direction (16) peut être fixée sur un dispositif de base (17) disposé sous la masse préparatoire (14), lequel dispositif est doté de moyens de réglage (23 à 25) permettant de régler la colonne de direction dans une zone de l'angle (α) située entre l'axe de la colonne de direction (26) et la verticale (27).

2. Dispositif de simulation selon la revendication 1,
**caractérisé en ce que**
la tour de chute (3) comprend deux colonnes (4, 5) fixées sur une plaque de base (2) et comprenant chacune un dispositif de guidage (8) vertical.

3. Dispositif de simulation selon la revendication 2,
**caractérisé en ce que**
les dispositifs de guidage (8) sont conçus sous la forme de rails (9, 10) en forme de barres.

4. Dispositif de simulation selon l'une des revendications 1 à 3,
**caractérisé en ce que**
la masse préparatoire (14) est formée par deux corps de masse préparatoire (29, 30) en forme de barre, reliés par un tube de protection (28), à savoir un corps supérieur (29) et inférieur (30) de masse préparatoire, qui sont chacun dotés sur leurs extrémités longitudinales d'éléments de guidage (31, 32 ; 33, 34) pour le guidage dans la tour de chute (3).

5. Dispositif de simulation selon les revendications 3 et 4,
**caractérisé en ce que**
les éléments de guidage (31, 32 ; 33, 34) sont conçus sous la forme de fourche.

6. Dispositif de simulation selon la revendication 3 et 4,
**caractérisé en ce que**
le ressort (35) est disposé dans le tube de protection (28) et s'appuie d'un côté sur le corps inférieur (30) de masse préparatoire et de l'autre côté sur un cylindre de rebondissement (36), qui est guidé dans le tube de protection (28) et fait saillie vers le haut d'un alésage (37) central du corps supérieur (29) de masse préparatoire.

7. Dispositif de simulation selon la revendication 6,
**caractérisé en ce que**
le ressort (35) est conçu sous la forme d'un paquet de rondelles Belleville (46).

8. Dispositif de simulation selon la revendication 6 ou 7,
**caractérisé en ce que**
le cylindre de rebondissement (36) est relié à l'aide d'un dispositif de prétension (41, 42) au corps inférieur (30) de masse préparatoire.

9. Dispositif de simulation selon la revendication 8,
**caractérisé en ce que**
le cylindre de rebondissement (36) est conçu sous la forme d'un cylindre creux comprenant un fond (39) posé en direction du corps inférieur (30) de masse préparatoire, lequel fond est doté d'un alésage (40) axial, et **en ce que** le dispositif de prétension (41, 42) est formé d'une vis guidée à travers l'alésage (40) et s'appuyant sur le fond (39) et d'un écrou (42) s'appuyant sur le corps inférieur (30) de masse préparatoire.

10. Dispositif de simulation selon l'une des revendications 6 à 9,
**caractérisé en ce que**
entre l'extrémité (47) inférieure du ressort (35) et le corps inférieur (30) de masse préparatoire est inséré un capteur dynamométrique (48).

11. Dispositif de simulation selon l'une des revendications 1 à 10,
**caractérisé en ce que**
l'extrémité (15) côté volant de la colonne de direction (16) est dotée d'un palier à roulement (45), qui roule sur le côté inférieur (44) de la masse préparatoire (14).

12. Dispositif de simulation selon l'une des revendications 2 à 11,
**caractérisé en ce que**
le dispositif de base (17) est guidé horizontalement de manière à pouvoir être fixé sur la plaque de base (2) verticalement à la ligne de connexion des deux colonnes (4, 5).

13. Dispositif de simulation selon la revendication 12,
**caractérisé en ce que**
le dispositif de base (17) est formé d'un support (21) guidé sur la plaque de base (2) et d'un soutien (22) logé de manière à pouvoir pivoter verticalement sur celui-ci et pouvant être fixé sur celui-ci pour la colonne de direction (16).

14. Dispositif de simulation selon l'une des revendications 1 à 13,
**caractérisé en ce que**
un dispositif de délimitation (19) est prévu sur la tour de chute (3) pour intercepter la masse tombante (11).
